# EUROPÄISCHE PATENTSCHRIFT

(11) **EP 1 479 960 B1**
(45) Veröffentlichungstag und Bekanntmachung des Hinweises auf die Patenterteilung: **23.08.2006**
(21) Anmeldenummer: 04008032.7
(22) Anmeldetag: 02.04.2004
(51) Int. Cl.: F16L 25/00

(54) **Steckverbindung zwischen einem ringgewellten Metallschlauch und einem Anschlussstück**
Plug connection between a corrugated metal hose and a fitting
Connexion par fiche entre un tuyau métallique ondulé et un raccord

(30) Priorität: 17.05.2003 DE 20307753 U
(43) Veröffentlichungstag der Anmeldung: 24.11.2004
(73) Patentinhaber: Witzenmann GmbH, 75175 Pforzheim (DE)
(72) Erfinder: Gehring, Matthias, 75334 Straubenhardt (DE); Foitzik, Peter, 75242 Schellbronn (DE)
(74) Vertreter: Kaiser, Magnus

(56) Entgegenhaltungen:
- EP-A- 1 103 752
- DE-A- 19 948 007
- DE-U- 29 917 599

## Beschreibung

Die Erfindung betrifft eine Steckverbindung zwischen einem ringgewellten Metallschlauch und einem Anschlussstück, wobei das Anschlussstück eine zylindrische Fläche zur Aufnahme eines ringgewellten Endbereichs des Metallschlauchs aufweist.

Die Anbindung von Metallschläuchen, insbesondere wenn sie aus Meterware bestehen und eher ungenau an irgend einem Punkt der Schlauchwellen abgelängt werden, an Anschlussstücke oder Armaturen ist insbesondere hinsichtlich einer meist erwünschten Fluiddichtheit problematisch. Nicht selten wird zum Anschließen von Metallschläuchen daher vor Ort gelötet oder geschweißt, was naturgemäß aufwendig und zeitintensiv ist.

Die DE 100 31 729 A1 beschreibt demgegenüber eine Steckverbindung der eingangs genannten Art, bei der ein ringgewellter Metallschlauch auf ein Glattrohr aufgeschoben und mittels eines Dichtungsrings, der im Inneren einer Welle des Metallschlauchs sitzt und sich dichtend auf den Außenumfang des Glattrohrs auflegt, abgedichtet wird. Die Auszugssicherung erfolgt über ein in das Innere des Schlauchs einzulegendes, mit einer ringgewellten Außenprofilierung versehenes Halteelement, das in die Wellung formschlüssig eingreift und klemmend oder einrastend auf dem Glattrohr sitzt. Des weiteren beschreibt die DE 19948007 eine Steckverbindung gemäß dem Oberbegriff des Anspruchs 1.

Ausgehend von diesem Stand der Technik liegt der Erfindung die Aufgabe zugrunde, eine Steckverbindung der eingangs genannten Art hinsichtlich ihrer Handhabung weiter zu verbessern.

Gelöst ist diese Aufgabe durch eine Steckverbindung mit den Merkmalen des Patentanspruchs 1.

Vorteilhafte Ausgestaltungen und Weiterbildungen der Erfindung ergeben sich aus den Patentansprüchen 2 bis 7.

Nach der Erfindung kann also ein Meterwaren-Metallschlauch ganz einfach in eine Art zylindrische Muffe eingesteckt und mittels des Halteelements an dieser festgelegt werden. Die Ringdichtung, die erfindungsgemäß in einem der Wellentäler sitzt, dichtet gegen die zylindrische Innenfläche der Muffe ab, so dass an die Stirnfläche des eingesteckten Metallschlauchs keine besonderen Anforderungen zu stellen sind; denn die Ringdichtung sorgt für eine zuverlässige Abdichtung der Steckverbindung. Eine ungenaue oder nicht entgratete stirnseitige Kante des Metallschlauchs ist im Rahmen der Erfindung tolerierbar.

Die erfindungsgemäße Steckverbindung ist also einfach und dabei gleichzeitig wirkungsvoll aufgebaut. Besondere Fertigkeiten und aufwendige Arbeiten vor Ort entfallen, wobei gleichzeitig die Herstellungskosten für die Elemente der erfindungsgemäßen Steckverbindung sehr niedrig bleiben.

Da insbesondere Meterware-Metallschläuche mit relativ großen Toleranzen bei den Abmessungen der Wellen und der Wellentäler gefertigt werden, ist im Rahmen der Erfindung vorzugsweise vorgesehen, dass das Wellental im Endbereich des Metallschlauchs, das als Sitz für eine außenliegende Ringdichtung dient, gegebenenfalls durch einen von außen und von innen auf den Metallschlauch einwirkenden Umformvorgang hergestellt worden ist.

Als Halteelement kann eine umgebördelte Welle des Metallschlauchs vorgesehen sein. Diese Welle muss durch das Umbördeln so verformt sein, dass sie über den Außendurchmesser der unveränderten Wellen radial übersteht und einen Flansch zum Festlegen am Anschlussstück bildet. Neben der hierdurch gewährleisteten definierten Einstecktiefe des Metallschlauchs in das Anschlussstück kann die Auszugssicherung dann beispielsweise dadurch hergestellt werden, dass auch das Anschlussstück einen endständig angeformten Verbindungsflansch aufweist, der Verbindungsflansch des Anschlussstücks und die umgebördelte Welle aufeinander zu liegen kommen und mittels einer beide Flansche formschlüssig umgreifenden Sicherungsklammer aneinander festgelegt werden. Ein entsprechend vorkonfektioniertes Metallschlauchende mit gegebenenfalls bereits einer aufgesetzten Ringdichtung kann nach dieser Ausgestaltung der Erfindung also ganz einfach in das Anschlussstück hineingesteckt und eine Klammer über die beiden Flansche gesteckt werden, um eine sichere und dichte Anbindung des Metallschlauchendes herzustellen.

Alternativ hierzu kann als Halteelement auch nur eine Sicherungsklammer vorgesehen sein, welche durch eine entsprechende Ausnehmung im Anschlussstück hindurch in ein Wellental des Metallschlauchs eingreift und hierdurch die Ausziehsicherung des Metallschlauchs aus dem Anschlussstück herstellt. Auch hier ergibt sich wiederum die eben beschriebene einfache Einsteckbarkeit und Festlegbarkeit des Metallschlauchs in das bzw. im Anschlussstück, wobei das Vorkonfektionieren bzw. Vorbereiten des Metallschlauchs noch einfacher ist, da keine umgebördelte Welle als Flansch vorhanden sein muss. Auch ein Flansch am Anschlussstück erübrigt sich dann.

Zur Erhöhung der Stabilität des Metallschlauchs im Anschlussstück kann ein Zentrierelement vorgesehen sein, das in ein Wellental im Endbereich des Metallschlauchs einsetzbar ist und eine der zylindrischen Fläche des Anschlussstücks angepasste Außenfläche aufweist. Ein solches Zentrierelement verbessert die Führung und den Halt des Metallschlauchs im Anschlussstück.

Ebenfalls im Sinne einer verbesserten Führung und eines verbesserten Halts des Metallschlauchs im Anschlussstück, aber auch zur nochmaligen Verbesserung hinsichtlich der Pannensicherheit der Dichtung können mehrere Sitze für jeweils eine Ringdichtung vorhanden sein.

Da die Führung eines ringgewellten Metallschlauchs in einer zylindrischen Muffe naturgemäß nur über die höchsten Stellen der einzelnen Wellen erfolgt, ist es vorteilhaft, die Führung und den Halt des Metallschlauchendes im Anschlussstück dadurch zu erhöhen, dass zwei oder mehr Wellen im Endbereich des Metallschlauchs zu einer im wesentlichen zylindrischen Fläche umgeformt werden, wobei diese zylindrische Fläche einen Durchmesser aufweist, der demjenigen der Wellenberge entspricht. Die Umformung des gewellten Metallschlauchs erfolgt in diesem Fall also so, dass ein Wellental radial nach außen umgeformt wird. Dies kann vor Ort, aber auch bereits beim Metallschlauchhersteller durchgeführt werden.

Drei Ausführungsbeispiele der vorliegenden Erfindung werden im Folgenden anhand der beigefügten Zeichnungen näher beschrieben und erläutert. Es zeigen:
- Figuren 1 bis 4: die verschiedenen Arbeitsschritte beim Herstellen einer Steckverbindung;
- Figuren 5 bis 8: die verschiedenen Arbeitsschritte beim Herstellen einer erfindungsgemäßen Steckverbindung nach einem erster Ausführungsbeispiel;
- Figuren 9 bis 12: die einzelnen Arbeitsschritte beim Herstellen einer Steckverbindung nach einem zweiten Ausführungsbeispiel.

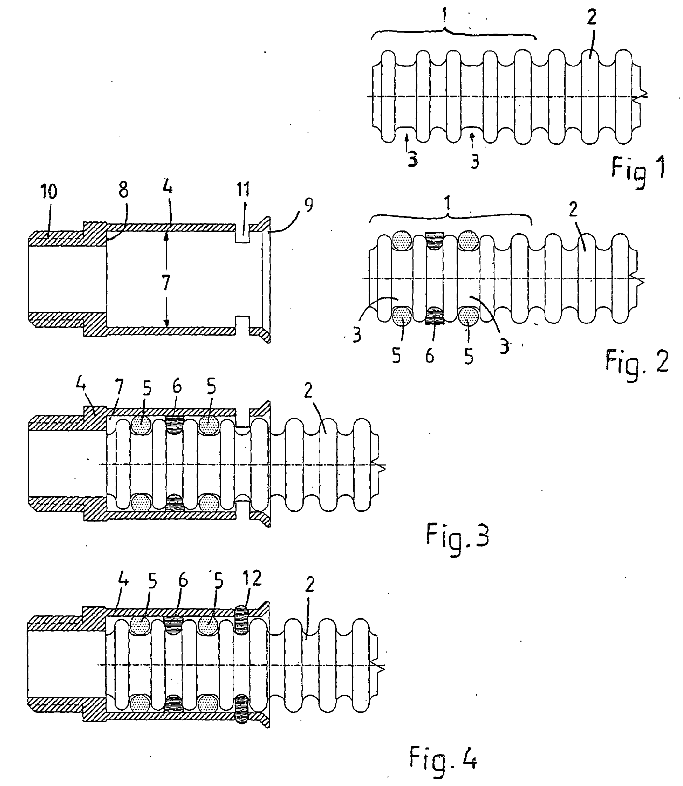

In Figur 1 ist zunächst ein Endbereich 1 eines ringgewellten Metallschlauchs 2 dargestellt. Das erste und das dritte Wellental dieses Endbereichs 1 sind als Dichtungssitze 3 ausgebildet.

Figur 2 zeigt den zum Einstecken in ein Anschlussstück 4 vorbereiteten Endbereich 1 des Metallschlauchs 2, wobei in den beiden Dichtungssitzen 3 jeweils eine O-Ring-Dichtung 5 sitzt und zwischenliegend, im zweiten Wellental, zusätzlich ein Zentrierelement 6 mit zylindrischer Außenkontur eingesetzt ist.

Das Anschlussstück 4 ist als Muffe ausgebildet, mit einer zylindrischen Aufnahmefläche 7, einem Anschlag 8 für das Ende des Metallschlauchs 2 und einer Einführschräge 9 sowie einem Gewinde 10 zum Anschluss einer weiteren Armatur.

Figur 3 zeigt die Montagephase, in der der Metallschlauch 2 in das Anschlussstück 4 eingeführt worden ist, wobei die beiden O-Ring-Dichtungen 5 und das Zentrierelement 6 an der zylindrischen Aufnahmefläche 7 des Anschlussstücks 4 anliegen. Die O-Ring-Dichtungen 5 stellen hierbei eine Fluiddichtheit der Steckverbindung her.

Als Ausziehsicherung ist, wie Figur 4 zeigt, eine Sicherungsklammer 12 vorgesehen, welche von außen durch zwei tangentiale Ausnehmungen 11 hindurch so in das Anschlussstück 4 eingesetzt wird, das sie einrastend in ein Wellental des Metallschlauchs 2 eingreift und diesen somit formschlüssig am Anschlussstück 4 festlegt.

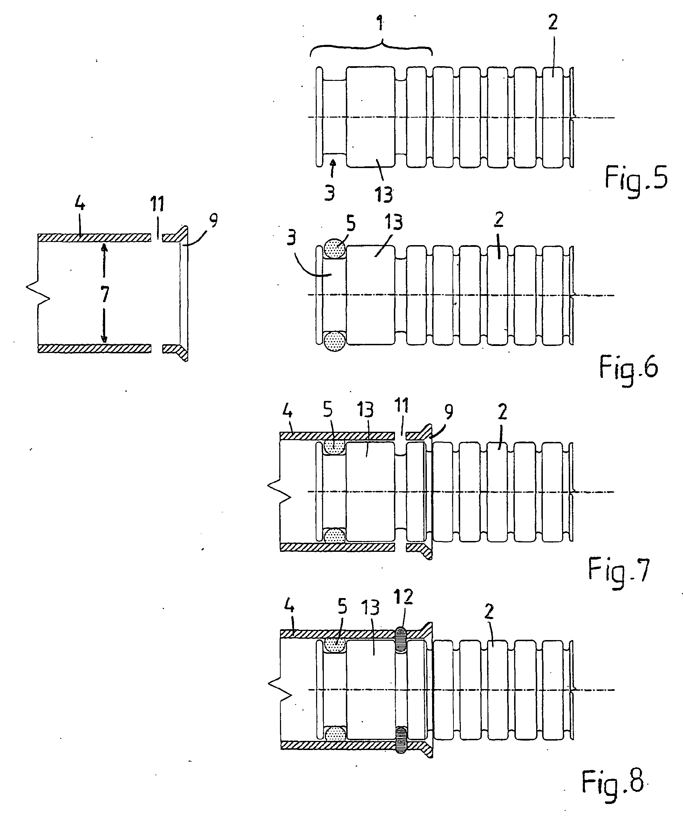

Die Figuren 5 bis 7 zeigen dieselben Montagephasen wie die Figuren 1 bis 4, für die erfindungsgemäße Steckverbindung. Einander entsprechende Elemente sind mit denselben Bezugszeichen versehen, um den Zusammenhang deutlicher zu machen.

Wiederum zeigt Figur 5 den Metallschlauch 2 mit seinem Endbereich 1 und diesmal nur einem Dichtungssitz 3. Hier sind nun die zweite und dritte Welle des Metallschlauchs 2 zu einer zylindrischen Fläche 13 verschmolzen, um die Führung des Metallschlauchs 2 im Anschlussstück 4 zu verbessern.

Figur 6 zeigt in schematischer Darstellung das Anschlussstück 4 mit innenliegender zylindrischer Aufnahmefläche 7, Einführschräge 9 und zwei Ausnehmungen 11 für die Sicherungsklammer 12. Hier ist ebenfalls vor dem Einstecken des Metallschlauchs 2 in das Anschlussstück 4, was Figur 7 zeigt, eine O-Ring-Dichtung 5 auf den Dichtungssitz 3 aufgesetzt worden.

Anhand Figur 7 wird deutlich, dass die zylindrische Fläche 13 die Führung und den Halt des Metallschlauchs 2 im Anschlussstück 4 entscheidend verbessert und somit die Einstecktiefe gegenüber dem oben beschriebenen Beispiel deutlich geringer sein kann.

In Figur 8 ist der Endzustand der hier beschriebenen Steckverbindung dargestellt. Wie in Figur 4 ist hier wiederum eine Sicherungsklammer 12 durch zwei tangentiale Ausnehmungen 11 im Anschlussstück 4 hindurch so eingesteckt worden, dass sie in ein Wellental des Metallschlauchs 2 eingreift und diesen somit formschlüssig am Anschlussstück 4 festlegt.

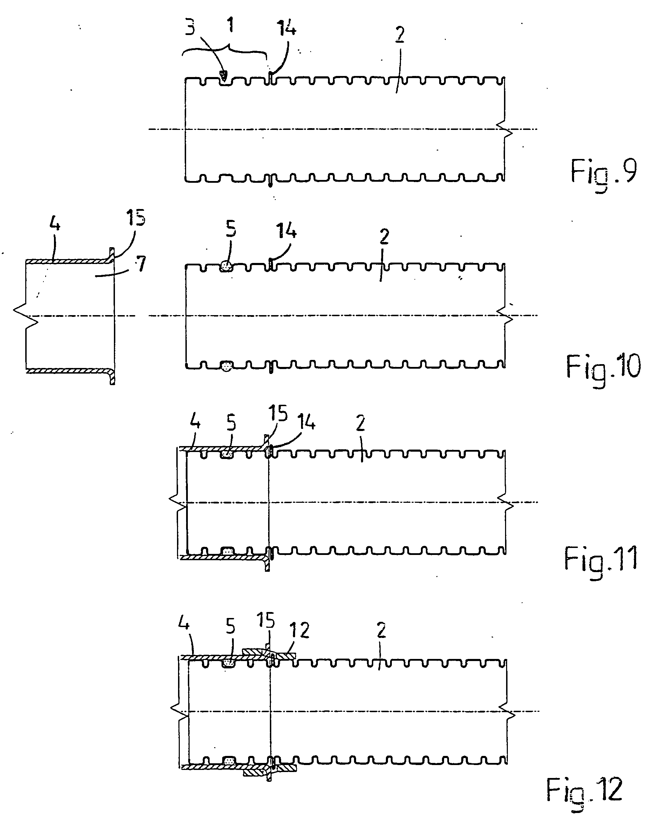

Das zweite Ausführungsbeispiel ist anhand der Figuren 9 bis 12 nur noch stark schematisiert dargestellt. Auch hier sind wieder die Montagephasen aus den Figuren 1 bis 4 in einzelnen Figuren gezeigt.

Wie anhand Figur 9 erkennbar, ist wiederum ein Dichtungssitz 3 vorhanden, und zwar hier im zweiten Wellental. Die fünfte Welle ist, was das Besondere dieses Ausführungsbeispiels ist, so umgebördelt worden, dass sie einen Flansch 14 bildet, welcher radial über die anderen Wellen übersteht.

Das Anschlussstück 4 ist, wie Figur 10 am besten zeigt, öffnungsseitig mit einem Verbindungsflansch 15 versehen. Wie in Figur 11 dargestellt, wird der Metallschlauch 2 mit seinem Flansch 14 - nach vorherigem Einsetzen einer O-Ring Dichtung 5 in den Dichtungssitz 3 - so weit in das Anschlussstück 4 eingeführt, dass der Flansch 14 des Metallschlauchs 2 und der Verbindungsflansch 15 des Anschlussstücks 4 aneinander zu liegen kommen. Um die beiden Flansche 14 und 15 und somit den Metallschlauch 2 und das Anschlussstück 4 aneinander festzulegen, wird zum Schluss, wie Figur 12 zeigt, eine Sicherungsklammer 12 aufgesetzt, welche die beiden Flansche 14, 15 formschlüssig umgreift.

## Patentansprüche

1. Steckverbindung zwischen einem ringgewellten Metallschlauch (2) und einem Anschlussstück (4), wobei das Anschlussstück (4) als Steckmuffe mit einer im Inneren des Anschlussstückes (4) befindlichen zylindrischen Fläche (7) zur Aufnahme eines ringgewellten Endbereichs (1) des Metallschlauchs (2) ausgebildet ist, wobei zumindest ein Wellental im Endbereich (1) des Metallschlauchs (2) als Sitz für eine außenliegende Ringdichtung (5) vorgesehen ist, während vom Ende des Metallschlauchs (2) her gesehen hinter dem Sitz der Ringdichtung (5) ein Halteelement (12, 14) zur Herstellung einer Auszugssicherung zwischen dem Metallschlauch (2) und dem Anschlussstück (4) vorgesehen ist,
**dadurch gekennzeichnet,**
**dass** zwei oder mehr Wellen im Endbereich (1) des Metallschlauchs (2) zu einer im wesentlichen zylindrischen Fläche (13) mit einem Durchmesser, der demjenigen der Wellenberge entspricht, umgeformt sind.

2. Steckverbindung nach Anspruch 1,
**dadurch gekennzeichnet,**
**dass** der Sitz (3) für die außenliegende Ringdichtung (5) durch einen von außen und von innen auf den Metallschlauch (2) einwirkenden Umformvorgang hergestellt worden ist.

3. Steckverbindung nach einem der Ansprüche 1 oder 2,
**dadurch gekennzeichnet,**
**dass** als Halteelement (12, 14) eine solcherart umgebördelte Welle des Metallschlauchs (2) vorgesehen ist, dass diese über den Außendurchmesser der unveränderten Wellen radial übersteht und einen Flansch (14) zum Festlegen am Anschlussstück (4) bildet.

4. Steckverbindung nach Anspruch 3,
**dadurch gekennzeichnet,**
**dass** eine Sicherungsklammer (12) vorgesehen ist, welche die umgebördelte Schlauchwelle (14) und einen am Anschlussstück (4) angeformten Verbindungsflansch (15) formschlüssig umgreift und so aneinander festlegt.

5. Steckverbindung nach einem der Ansprüche 1 oder 2,
**dadurch gekennzeichnet,**
**dass** als Halteelement eine Sicherungsklammer (12) vorgesehen ist, welche durch eine entsprechende tangentiale Ausnehmung (11) im Anschlussstück (4) hindurch in ein Wellental des Metallschlauchs (2) eingreift.

6. Steckverbindung nach einem der Ansprüche 1 bis 5,
**dadurch gekennzeichnet,**
**dass** mehrere Sitze für jeweils eine Ringdichtung (5) vorhanden sind.

7. Steckverbindung nach einem der Ansprüche 1 bis 5,
**dadurch gekennzeichnet,**
**dass** ein in ein Wellental im Endbereich (1) des Metallschlauches (2) einsetzbares Zentrierelement (6) vergesehen ist, welches einen der zylindrischen Flöche (7) des Anschlussstückes (4) angepasste Außenfläche aufweist.

## Claims

1. A plug connection between an annularly corrugated metal hose (2) and a connecting member (4), the connecting member (4) being constructed in the form of a plug sleeve with a cylindrical surface (7) situated in the interior of the connecting member (4) for receiving an annularly corrugated end region (1) of the metal hose, at least one corrugation trough in the end region (1) of the metal hose (2) being provided as a seat for an external annular seal (5) whilst provided behind the seat of the annular seal (5), seen from the end of the metal hose (2), a retaining element (12, 14) is provided for producing a removal lock between the metal hose (2) and the connecting member (4), **characterised in that** two or more corrugations in the end region (1) of the metal hose (2) are deformed into a substantially cylindrical surface (13) with a diameter, which corresponds to that of the corrugation peaks.

2. A plug connection as claimed in claim 1, **characterised in that** the seat (3) for the external annular seal (5) has been produced by a deformation process acting on the metal hose (2) from the exterior and the interior.

3. A plug connection as claimed in one of claims 1 or 2, **characterised in that** a corrugation of the metal hose (2) is provided as the retaining element (12, 14), which is so beaded that it projects radially beyond the external diameter of the unaltered corrugations and constitutes a flange (14) for fastening to the connecting member (4).

4. A plug connection as claimed in claim 3, **characterised in that** a fastening clip (12) is provided which form-lockingly engages over the beaded hose corrugation (14) and a connecting flange (15) integrally formed on the connecting member (4) and thus clamps them to one another.

5. A plug connection as claimed in one of claims 1 or 2, **characterised in that** a fastening clip (12) is provided as the retaining element which engages through a corresponding tangential opening (11) in the connecting member (4) into a corrugation trough in the metal hose (2).

6. A plug connection as claimed in one of claims 1 to 5, **characterised in that** a plurality of seats are present for respective annular seals (5).

7. A plug connection as claimed in one of claims 1 to 5, **characterised in that** a centering element (6) is provided, which is insertable into a corrugation trough in the end region (1) of the metal hose (2) and which has an outer surface matched to the cylindrical surface (7) of the connecting member (4).

## Revendications

1. Connexion par fiche entre un tuyau métallique ondulé (2) et un raccord (4), le raccord (4) étant réalisé comme un manchon enfichable avec une surface cylindrique (7) se trouvant à l'intérieur du raccord (4) permettant de loger une zone d'extrémité ondulée (1) du tuyau métallique (2), un creux d'ondulation au moins étant prévu dans la zone d'extrémité (1) du tuyau métallique (2) en tant que logement pour un joint annulaire externe (5), alors que pour ce qui est de l'extrémité du tuyau métallique (2) derrière le logement du joint annulaire (5), un élément d'arrêt (12, 14) est prévu entre le tuyau métallique (2) et le raccord (4), servant ainsi de sécurité anti-retrait
**caractérisée**
**en ce que** deux ondulations ou plus dans la zone d'extrémité (1) du tuyau métallique (2) sont déformées en une surface essentiellement cylindrique (13) dont le diamètre correspond à celui des crêtes des ondulations.

2. Connexion par fiche selon la revendication 1,
**caractérisée**
**en ce que** le logement (3) du joint annulaire externe (5) a été fabriqué au moyen d'un processus de déformation agissant sur le tuyau métallique (2) par l'extérieur et par l'intérieur.

3. Connexion par fiche selon l'une quelconque des revendications 1 ou 2,
**caractérisée**
**en ce qu'**une ondulation du tuyau métallique (2) est prévue en tant qu'élément d'arrêt (12, 14), laquelle ondulation est bridée de telle sorte qu'elle fait saillie de manière radiale par rapport au diamètre extérieur de l'ondulation non déformée et forme une bride (14) servant d'élément d'arrêt sur le raccord (4).

4. Connexion par fiche selon la revendication 3,
**caractérisée**
**en ce qu'**un clip de sécurité (12) est prévu, lequel met en prise selon un engagement positif l'ondulation bridée du tuyau (14) et une bride de raccordement (15) formée sur le raccord (4) et les fixe ainsi l'un à l'autre.

5. Connexion par fiche selon l'une quelconque des revendications 1 ou 2,
**caractérisée**
**en ce qu'**un clip de sécurité (12) est prévu en tant qu'élément d'arrêt, lequel entre en prise à travers un évidement tangentiel correspondant (11) dans le raccord (4) dans un creux d'ondulation du tuyau métallique (2).

6. Connexion par fiche selon l'une quelconque des revendications 1 à 5,
**caractérisée**
**en ce que** plusieurs logements sont présents pour chaque joint annulaire (5).

7. Connexion par fiche selon l'une quelconque des revendications 1 à 5,
**caractérisée**
**en ce qu'**un élément de centrage (6) pouvant être installé dans un creux d'ondulation au niveau de la zone d'extrémité (1) du tuyau métallique (2) est prévu, lequel présente une surface extérieure adaptée à la surface cylindrique (7) du raccord (4).
